Europäisches Patentamt

European Patent Office

Office européen des brevets

(11) Veröffentlichungsnummer: **0 384 446 A1**

## (12) EUROPÄISCHE PATENTANMELDUNG

(21) Anmeldenummer: 90103390.2

(51) Int. Cl.⁵: **A01G 9/10**

(22) Anmeldetag: 22.02.90

(30) Priorität: 23.02.89 DE 8902165 U

(43) Veröffentlichungstag der Anmeldung:
29.08.90 Patentblatt 90/35

(84) Benannte Vertragsstaaten:
AT BE CH DE DK ES FR GB IT LI NL SE

(71) Anmelder: **REIMANN SPINNEREI UND WEBEREI GMBH**
**Grevener Damm 227**
**D-4407 Emsdetten(DE)**

(72) Erfinder: **Reimann, Monika**
**Weststrasse 26**
**D-4407 Emsdetten(DE)**

(74) Vertreter: **Meldau, Gustav, Dipl.-Ing. et al**
**Patentanwälte Dipl.-Ing. Gustav Meldau**
**Dipl.-Phys. Dr. H.-J. Strauss Postfach 2452**
**Vennstrasse 9**
**D-4830 Gütersloh 1(DE)**

(54) Umhüllung für den Wurzelstock von Pflanzen.

(57) Zur einfachen und wirtschaftlichen Herstellung einer Umhüllung für den Wurzelstock von Pflanzen bei der Aufzucht im Freiland zur Ausbildung von fetsen Wurzelballen in begrenztem Raum wird zum Verhindern des Auswurzelns und der Vermeidung von Verschulen der Wurzelstock (1) zusammen mit Erde (2) o.dgl. in eine Tüte, Beutel oder einen Sack eingesetzt, der aus einem engmaschigen Gewebe oder Gewirk gebildet ist, das aus Monofilen und/oder Garn aus synthetischem Material besteht, wobei der Sack oder die Tüte Nähte an zu verbindenden Kanten aufweist, die genäht, geschweisst oder geklebt sind.

Fig. 1

EP 0 384 446 A1

## Umhüllung für den Wurzelstock von Pflanzen

Die Erfindung bezieht sich auf eine Umhüllung für den Wurzelstock von Pflanzen bei Aufzucht im Freiland zur Ausbildung von festen Wurzelballen in begrenztem Raum. Diese Umhüllung wird vornehmlich verwendet für Gehölze und Sträucher, wenn diese ihren Wurzelballen in größerem Umfang ausbilden.

Bei der Aufzucht derartiger Pflanzen wurden diese bislang in sogenannten Containern gezogen und zwar in Gewächshäusern -dabei in der wärmeren Jahreszeit gelegentlich auch außerhalb von Gewächshäusern - um den Wurzelballen der Pflanzen kompakt zu halten, damit die Pflanzen jederzeit verkaufsbereit sind.

Diese Art der Pflanzenaufzucht hat sich als recht aufwendig und damit unwirtschaftlich erwiesen, weil die Container, abgesehen davon, daß sie selbst einen nicht unerheblichen Aufwand bedeuten, im Laufe der Aufzucht gegen größere ausgetauscht werden müssen, weil die Pflanzen in den Containern bewegt werden müssen, damit sie zumindest in älteren Jahrgängen an das Freiland gewöhnt werden und weil damit auch ein nicht unwesentlich höherer Arbeitsaufwand verbunden ist.

Demgegenüber verlangt die Anzucht von Pflanzen im Freiland, daß die Pflanzen etwa jedes Jahr verschult werden müssen, d. h., der Wurzelballen der Pflanzen muß in einem gewissen Umfang abgestochen werden, und zwar insbesondere auch unterhalb der Pflanze, damit die Pflanze gewissermaßen ständig verkaufsbereit ist. Wenn der Wurzelstock der Pflanze sich beliebig ausbreiten kann und dann erst beim Verkauf abgestochen wird, befinden sich in dem dann übrig gebliebenen Wurzelstock nicht ausreichend feine Saugwurzeln, daher besteht regelmäßig die Gefahr, daß Pflanzen mit derart abgestochenem Wurzelstock nach dem Verpflanzen eingehen.

Es wurde daher auch schon vorgeschlagen, bei der Anzucht von Pflanzen im Freiland das Auswurzeln dadurch zu verhindern -andererseits ein jährliches Verschulen zu vermeiden -,daß die Pflanze gezwungen wurde, einen festen, kompakten Wurzelballen auszubilden. Nach dem bekannten Vorschlag wurde das dadurch erreicht, daß die in ihrer Größe nach der Erfahrung ausgehobene Pflanzgrube an Wänden und Boden derweise beschichtet wurde, daß an den Wänden ein Vlies eingelegt wurde und am Boden eine Kunststoffolie. Daraufhin wurde die Pflanze in üblicher Weise mit ihrem Wurzelstock in diese, an ihren Wänden beschichtete, Grube eingesetzt und durch Auffüllen von Erde eingepflanzt. Die am Boden der Grube angeordnete Kunststoffolie verhinderte dann sicher, daß der Wurzelstock der Pflanze sich nach unten ausdehnen konnte, das Vlies, mit dem die Wände der Grube aus gekleidet waren, verhinderte ein seitliches Flächenwachstum des Wurzelstocks der Pflanze, denn dieses Vlies konnte allenfalls von äußerst feinen Wurzeln durchdrungen werden, andererseits jedoch fand durch das Vlies hindurch ein ausreichender Austausch von Bodenfeuchtigkeit statt, so daß sich die Pflanze im Freiland in natürlicher Weise entwickeln konnte.

Die bekannte Anordnung hat jedoch gewisse Nachteile insofern, als im allgemeinen die am Boden der Pflanzgrube angeordnete Kunststoffolie, undurchdringlich, auch für Wasser undurchdringlich ist und daher bei Niederschlägen oder künstlicher Bewässerung aufgrund der zur Mitte hin nach unten durchgewölbten Form sich dort gewissermaßen eine Wasserpfütze sammelt, die zumindest lange Zeit stehenbleibt und sich äußerst nachteilig auswirkt. Durch die ständige, nicht zu vermeidende, übergroße Feuchtigkeit über der Folie werden Fäulnisvorgänge und dergleichen eingeleitet, die sich sehr nachteilig auf den Wurzelstock der Pflanze auswirken. Auch das die Pflanzgrube umgebende Vlies kann unter bestimmten, jedoch nicht selten eintretenden Voraussetzungen, beispielsweise aufgrund von Kapillarwirkungen, zu übergroßer Feuchtigkeitskonzentration führen mit ebenfalls nachteiligen Wirkungen auf den Wurzelstock der Pflanze. Andererseits kann dieses Vlies aufgrund seiner verhältnismäßig großen Dichte und auch weil es,ähnlich wie ein Filter wirkend, im Laufe der Zeit feinste Bodenbestandteile anreichern, zu einer Sperre werden, die einen freien und natürlichen Austausch zwischen der den Wurzelstock unmittelbar umgebenden Erde und dem Boden außerhalb des ursprünglichen Pflanzloches verhindert, so daß auch hier Nachteile für die aufzuziehende Pflanze eintreten.

Die Erfindung hat sich die Aufgabe gestellt, die vorbeschriebenen Nachteile zu vermeiden und eine Umhüllung der gattungsgemäßen Art zu schaffen, die sehr einfach herzustellen und anzuwenden und damit wirtschaftlich ist, andererseits jedoch eine optimale Umhüllung des Wurzelstocks einer Pflanze bei der Anzucht darstellt, wobei der freie Austausch von Feuchtigkeit und Nährstoffen innerhalb und außerhalb dieser Umhüllung in keiner Weise behindert wird, der Wurzelstock der Pflanze jedoch sehr wirksam an einer Ausbreitung gehindert wird, sondern sich vielmehr kompakt innerhalb der Umhüllung entwickelt.

Zur Lösung dieser Aufgabe ist eine Umhüllung der gattungsgemäßen Art dadurch gekennzeichnet, daß zum Verhindern des Auswurzelns und der Vermeidung von Verschulen der Wurzelstock zusammen mit Erde oder dergleichen in eine Tüte, Beutel oder einen Sack eingesetzt ist, der aus einem engmaschigen Gewebe oder Gewirk gebildet ist, das aus Monofilen und/oder Garn aus synthetischem Material besteht, wobei der Sack oder die Tüte Nähte an zu verbindenden Kanten aufweist, die genäht, geschweisst oder geklebt sind. Der Sack oder die Tüte sollen dabei vorteilhaft höchstens zwei Nähte an zu verbindenden Kanten aufweisen.

Ein solcher Sack bzw. eine solche Tüte sind aus bahnenförmigen, gewebtem oder gewirktem Material oder auch aus rund gearbeitetem Material einfach und leicht auszubilden, vorzuformen und können flachgelegt gelagert und verschickt werden, während sie zur Verwendung entweder in die ausgehobene Pflanzgrube eingestellt oder aber schon im Freien aufgestellt und dann mit der Pflanze "bestückt" werden, indem der Wurzelstock der Pflanze zusammen mit Pflanzerde in die Tüte, den Beutel oder den Sack eingesetzt und eingefüllt werden. Durch die Verwendung von engmaschigem Gewebe oder Gewirk, das aus synthetischem Material besteht, ist einerseits verhindert, daß sich der Wurzelstock während der Anzucht der Pflanze ausdehnen kann, er kann allenfalls - in übrigens erwünschter Weise - feine Saugwurzeln durch die Gewebemaschen hindurch nach außen wachsen lassen, andererseits ist dieses Gewebe oder Gewirk aufgrund seiner Materialeigenschaften gegen Verrottung oder andere deformierende oder zerstörende Eigenschaften gesichert, wobei jedoch ein ungehin derter freier Austausch von Feuchtigkeit und anderen, im Boden vorhandenen Nährstoffen und dergleichen, auch von Kleinlebewesen und Bakterien, zwischen der Pflanzerde am Wurzelstock innerhalb des Sacks und dem umgebenden Boden ungehindert stattfinden kann.

Nach einer einfachen Ausführungsform ist der Sack oder die Tüte derart gebildet, daß ein Abschnitt einer gewebten Flachbahn doppelt gelegt und an der Faltung eingelegt ist zur Erzeugung einer dreifachen, den Boden bildenden Faltung sowie Vernähen, Verschweissen und/oder Verkleben der aufeinanderliegenden Längsseiten einschliesslich zumindest eines Teils der eingelegten Faltung und gegebenenfalls nur eines Teiles des oberen Randabschnittes.

Diese Ausführung bildet die Möglichkeit, einfache, flachgewebte Bahnen zu verwenden, die auf einfache Art und Weise in die erforderliche Form gelegt, gefaltet und genäht oder auf andere Art an den Stoss-Stellen miteinander verbunden werden können. eine weitgehend mechanische Fertigung ist möglich, diese Aufführungsform ist daher sehr wirtschaftlich.

Nach einer vorzugsweisen Ausführungform besteht der Sack oder oder die Tüte aus rundgewebtem oder -gewirktem textilen Material, wobei der Boden durch eine Quernaht geschlossen ist. Nach einer ähnlichen Ausführungsform besteht der Sack oder die Tüte aus rundgewebtem oder -gewirktem textilen Material, wobei der Boden rundum fächerförmig zur Mitte gefaltet, eine zentrale Verbindungsstelle zur Festlegung aufweist.

In der vorstehenden Form ist eine äußerst wirtschaftliche Fertigung der Umhüllung nach der Erfindung gegeben und ebenso auch eine sehr einfache Handhabung möglich beim Aufstellen der Umhüllung zur Beschickung mit Wurzelstock und Pflanzerde, insbesondere dann, wenn nach einem weiteren vorteilhaften Kennzeichen der mit einer Verbindungsstelle verschlossene Boden eingenommen bzw. eingedrückt ist, so daß er in aufgestelltem Zustand die nahtlosen Seitenwände stabilisiert.

Der Beutel kann als Kreuzbodentüte ausgebildet sein, nach einer anderen vorteilhaften Ausführungsform kann der Beutel als Spitztüte ausgebildet sein, wobei jeweils eine Anpassung an die von der einzusetzenden Pflanze bevorzugte Wurzelform ermöglicht wird.

Das Gewebe oder Gewirk der Umhüllung soll eine Maschenweite von höchstens etwa 1 mm haben.

Das Gewebe oder Gewirk der Umhüllung kann durch Passieren zwischen erwärmten Walzen oder mittels Klebstoff stabilisiert sein, damit es, etwa halbstarr ausgebildet, beim Einsetzen des Wurzelstocks und Einfüllen der Pflanzerde auch außerhalb der Pflanzgrube seine Form bewahrt. Aus Monofilen bestehend ist das Gewebe oder Gewirk der Umhüllung halbstarr ausgebildet. Bei Verwendung eines Gewebes aus Monofilen kann auch in einer Richtung (Kette oder Schuß), in der anderen Richtung (Schuß oder Kette) das Gewebe aus Monofilen und Bändchen, mindestens im Verhältnis 1:1, d.h. mindestens ein Monofil abwechselnd mit einem Bändchen, bestehen. Bei Aufrechterhaltung der Halbstarrheit der Umhüllung wird dadurch die Durchlässigkeit des Gewebes und der Austausch mit dem umgebenden Boden begünstigt, andererseits jedoch ein Auswachsen der Wurzeln des Wurzelstockes aus der Umhüllung heraus noch wirksamer behindert.

Zur Verbesserung der Starrheit der Umhüllung beim Aufstellen können an der die Öffnung des Beutels umgebenden Kante Verstärkungen oder ein Hohlsaum ausgebildet sein.

Besonders vorteilhafte Weiterbildungen der Umhüllung nach der Erfindung bestehen darin, den oberen Bereich dieser Umhüllung derart auszubilden, daß der Ballen um etwa das Maß seines Halbmessers überragt wird. Dieser überragende Teil kann aus zwei lappenförmigen Bereichen bestehen, die, etwa überlappend umgeschlagen, bis dicht an den Stamm geführt sind und in dieser Lage mit mindestens einem Verbindungselement in Form eines Schlingstiches, eines Kunststoffverbinders oder einer Metallklammer o.dgl. aneinander fixiert sind. Eine andere Möglichkeit besteht darin, daß der den Ballen überragende Überstand am obersten Rand mit einem Band, Draht o.dgl. bis dicht an den Stamm der Pflanze zusammengezogen ist, so daß dieser oberste Bereich einen zeltartigen oberen Abschluss bildet.

Aufgrund der Steifheit bzw. Starrheit des Gewebes bedarf dieser zeltartige obere Abschluss keiner weiteren besonderen Unterstützung. Die Durchlässigkeit des Gewebes erlaubt Luftzutritt und insbesondere Eindringen von Wasser bei Regen und Bewässern. Zumindest wenn die Pflanze so eingesetzt ist, daß der Überstand aus dem Boden herausragt, ergibt sich ein Mulch-Effekt, der verhindert, daß Unkrautsamen eindringen bzw. (bei kleinen, durchgefallenen Samen) aufgrund der Abdeckung in Entwicklung und Wachstum wirksam behindert ist. Es ist damit eine wirksame Mulchabdeckung geschaffen.

Zweckmäßig ist der Beutel mit zwei Griffen versehen, die auch als unter dem Boden des Beutels durchlaufende Bandschlaufen ausgebildet sein können. Damit ist die Möglichkeit gegeben, insbesondere bei größeren Wurzelballen und Pflanzen, insbesondere beim Verkauf und Transport, die Handhabung wesentlich zu vereinfachen.

Allgemein bietet die Umhüllung nach der Erfindung über die genannten Vorteile hinaus auch noch die Möglichkeit, daß aufgrund der Verwendung eines steifen, starren Gewebes zumindest bei der Mehrzahl der angegebenen Ausführungen eine Raumform entsteht, die einem Topf bzw. einem üblichen

Pflanzgefäss gleicht - sie kann daher mit bekannten, üblichen Eintopf-Maschinen gehandhabt werden. Auch zum Einsetzen oder Verziehen im Freiland sind die Arbeitsverfahren wesentlich erleichtert, denn es kann dabei ein zumindest teilmechanisierter Arbeitsablauf angewendet werden, indem die Pflanzen mit umhülltem Wurzelballen von einem langsam fahrenden Fahrzeug in vorbereitete Furchen eingesetzt werden. Diese Furchen werden daran anschliessend mit entsprechenden Fahrgeräten wieder zugeschüttet und angedrückt.

Die Erfindung wird nachstehend anhand von Ausführungsbeispielen mit Bezug auf die Zeichnungen näher erläutert. In den Zeichnungen zeigen

- Figur 1 schematische Darstellung eines jungen Baumes mit Umhüllung des Wurzelstocks in Boden eingesetzt;
- Figur 2 Ausführungsform einer Umhüllung;
- Figur 3 andere Ausführungsform einer Umhüllung;
- Figur 4 weitere Ausführungsform einer Umhüllung;
- Figur 5 Darstellung eines Gewebes, aus dem die Umhüllung besteht;
- Figur 6 Darstellung einer anderen Ausführungsform eines Gewebes, aus dem die Umhüllung besteht;
- Figur 7 eine Umhüllung, vorzugsweise aus Schlauchgewebe mit eingefaltetem Boden;
- Figur 8 Vorbereitung einer Umhüllung aus einer Flachgewebebahn;
- Figur 9 fertige Umhüllung nach Fig. 8
- Figur 9a Detail aus Fig. 9
- Figur 10 Umhüllung mit Pflanze und zeltartiger oberer Abdeckung.

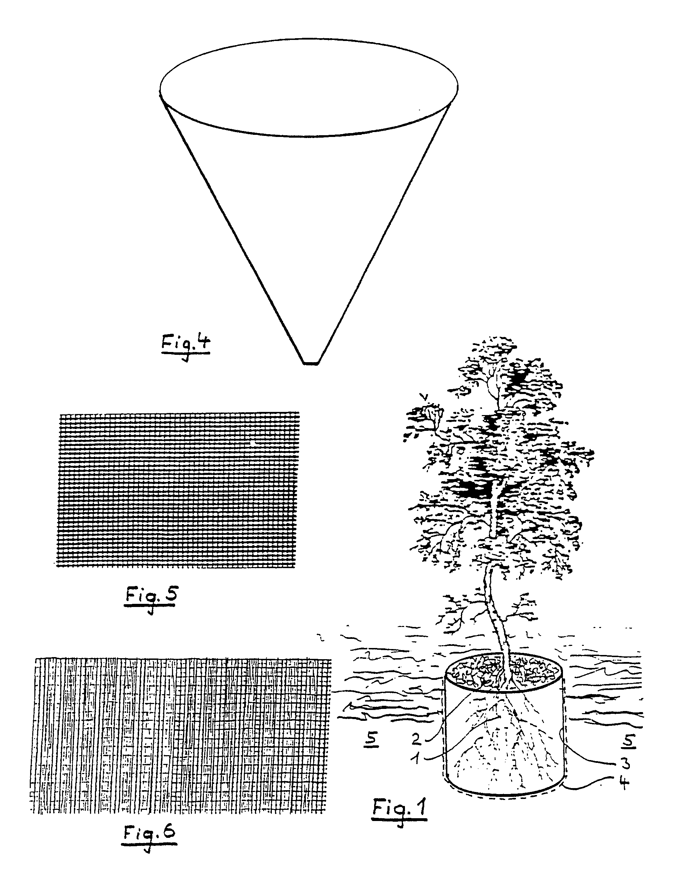

In Figur 1 ist als Übersichtzeichnung ein junger Baum dargestellt, dessen Wurzelstock 1 zusammen mit Pflanzerde 2 von einer Umhüllung 3 umgeben ist und damit in eine entsprechend gleichförmige Pflanzgrube 4 im Boden 5 im Freiland eingesetzt ist.

Die Umhüllung kann so ausgebildet sein, wie das in Figur 2 perspektivisch schematisch dargestellt ist. Die Umhüllung ist als Tüte oder Beutel ausgebildet mit einem Kreuzboden. Die Umhüllung besteht aus einem Gewebe oder Gewirk aus synthetischen Fasern, vorzugsweise aus Monofilen, wie das im oberen Teil der Figur 2 angedeutet ist. Im Grundriß ist die Umhüllung rechteckig oder quadratisch ausgebildet mit Seitenwänden 6 und einem Boden 7. Wenn die Umhüllung aus einer flachliegenden Gewebebahn hergestellt ist, befindet sich, beispielsweise an einer Kante zwischen den Seitenwänden eine Naht, die genäht sein kann, jedoch auch durch Schweißen oder Kleben hergestellt sein kann. Wenn die Umhüllung aus einem schlauchförmig gewebten oder gewirkten Material besteht, entfällt diese Längsnaht. Die Seitenwände 6 der Umhüllung haben die Höhe des Wurzelstokkes 1 der Pflanze und sind damit auch an die Tiefe der Pflanzgrube angepaßt. Der Boden 7 der Umhüllung ist unter Ausbildung von keilförmigen Falten eingeschlagen in der Weise, daß sich die von den Seitenwänden 6 her jeweils nach innen umgeknickten Bodenteile in der Mitte überlappen und einen Kreuzboden bilden. Die Überlappung 8 der Bodenteile ist durch eine Naht gesichert, sie kann jedoch auch geschweißt oder geklebt sein.

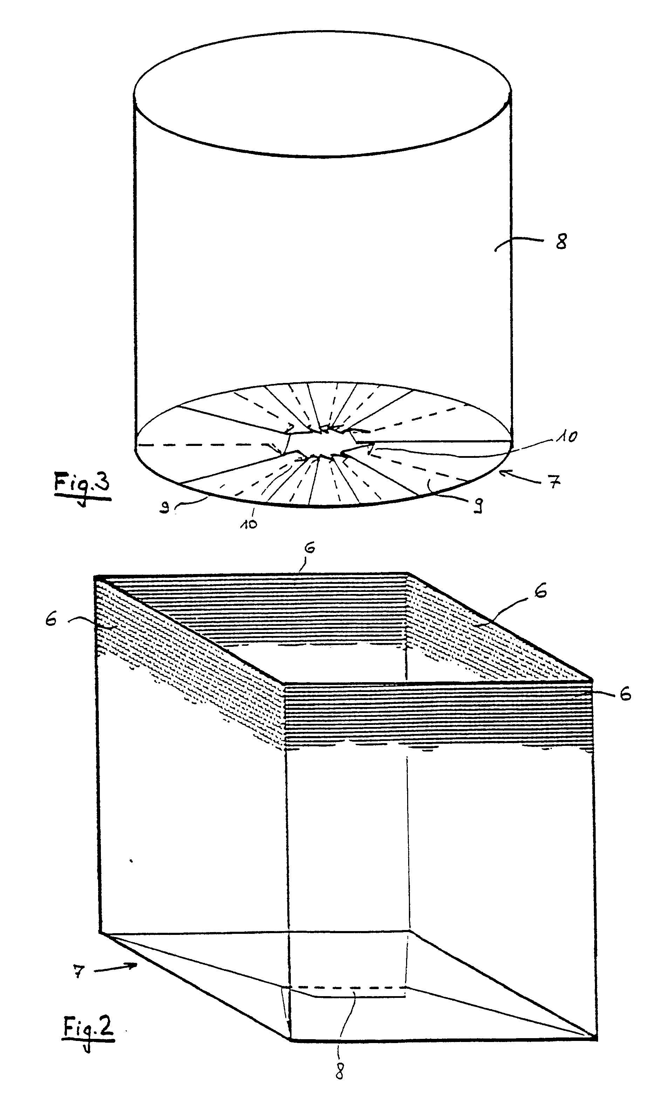

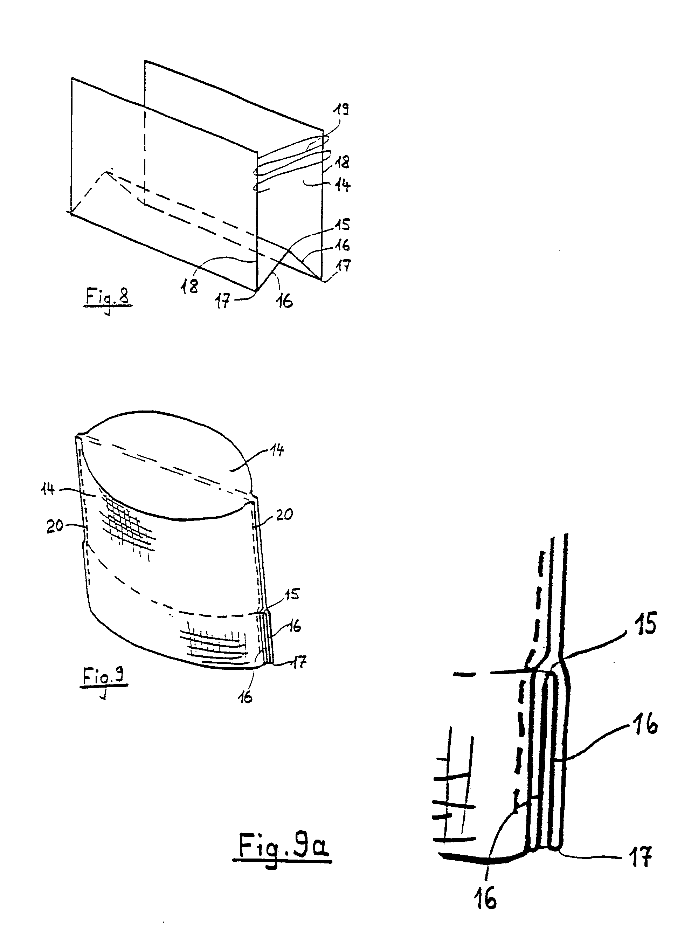

Nach der Figur 3 besteht eine Umhüllung aus vorzugsweise schlauchförmig gewebtem oder gewirktem Material, so daß eine Längsnaht nicht erforderlich ist. Der Grundriß der Umhüllung ist kreisförmig oder oval. Am unteren Ende der Seitenwand 8 sind eine größere Anzahl von Sektionen 9 unter Ausbildung von keilförmigen Falten 10 etwa rechtwinklig nach innen abgeknickt zur Ausbildung des Bodens 7. Die Länge der Sektionen 9 ist derart gewählt, daß sie sich im Zentrum des Bodens 7 überlappen und hier auf verhältnismäßig kleinem Bereich miteinander verschweißt sind. Eine solche Verschweißung läßt sich verhältnismäßig einfach, beispielsweise mittels eines auf Schweißtemperatur erwärmten Stempels, durchführen.

Aus Gründen der Übersichtlichkeit ist die Überlappung im Zentrum des Bodens 7 nicht dargestellt - es ist jedoch auch möglich, die Ausbildung des Bodens 7 derart vorzunehmen, wie das in der Figur 3 dargestellt ist, so daß im Zentrum des Bodens noch eine Öffnung verbleibt. In diesem Falle wird ein entsprechend zugeschnittenes Materialstück eingelegt und zusammen mit den Innenkanten der nach innen gefalteten Sektionen 9 verschweißt oder verklebt.

Eine andere Ausführungsform einer Umhüllung ist in Figur 4 dargestellt. Bei dieser Form handelt es sich um eine Spitztüte, die Umhüllung ist nach unten hin konisch ausgebildet und in bekannter Weise aus flachliegendem Material mit kreisförmiger Umrandung und einem zum Zentrum hin keilförmigen Ausschnitt gebildet. Dabei entsteht eine Naht, die vom oberen Rand bis zur Spitze verläuft. Diese Naht kann genäht oder auch verschweißt oder geklebt sein. Diese konische Ausführungsform einer Umhüllung nach Figur 4 kann vorteilhaft sein bei Pflanzen, die im wesentlichen eine Pfahlwurzel ausbilden.

Die in Figur 7 dargestellte Umhüllung besteht vorzugsweise aus einem Schlauchgewebe. Ein Abschnitt 11 des Gewebeschlauches wird an einem Ende eingefaltet und mit vier im wesentlichen diagonal einander gegenüberliegenden Aufeinanderfaltungen 12, so daß ein zentrischer, kurzer Mittelabschnitt 13 im Boden erzeugt wird, an dem ein überlappter Schlitz mit einer einzigen Naht o.dgl. zu schliessen ist.

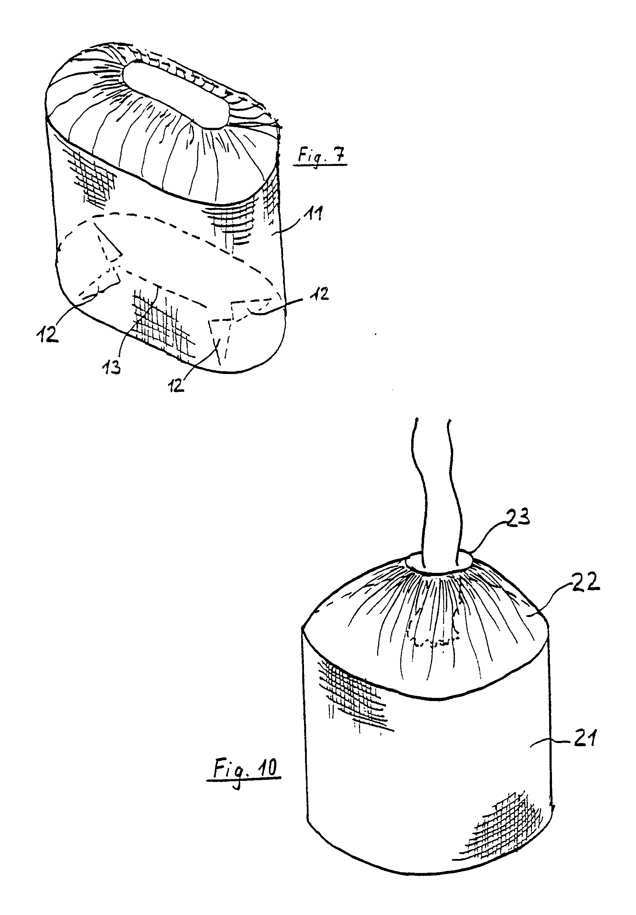

Die Figuren 8 - 9 a zeigen eine verhältnismäßig einfache Ausführungsform einer Umhüllung. Ein Abschnitt einer flachen Gewebebahn 14 wird gedoppelt aufeinandergelegt. Die entstehende Falte 15 wird eingezogen bzw. eingelegt, so daß in gleichen Abständen 16 davon weitere Falten 17 entstehen. Danach werden die beiden aufeinanderliegenden Längsseiten 18 miteinander verbunden, beispielsweise durch eine Naht 20, die durch die Wellenlinien 19 in Figur 8 angedeutet ist. Diese Naht 20 kann derart ausgebildet sein, daß sie nur den oberen Bereich der Einfaltung 15,16 erfasst und zusammenhält. Die Auffaltung und Ausbildung des Bodens wird dadurch in bestimmten Fällen vereinfacht, ohne daß andere Vorteile aufgegeben werden. Auch kann die Naht 20 nicht bis zum obersten Rand durchgeführt sein (Fig. 9a), wie weiter unten noch erläutert wird. Diese Ausführung nach den Figuren 8 - 9a ist besonders leicht und einfach zu fertigen, ihre Fertigung lässt sich sogar weitgehend mechanisieren, so daß sie sehr wirtschaftlich ist. Aufgrund der Starrheit des Gewebes lässt sich die so hergestellte fertige Umhüllung in die beschriebene, vorteilhafte Gestalt formen.

In der Figur 5 ist ein Gewebe dargestellt, das aus Monofilen besteht, d. h., aus starken drahtähnlichen Fäden aus Kunststoff, die nicht gesponnen sind. Sowohl die Kette als auch der Schuß des Gewebes bestehen aus diesen Fäden. Die Maschenweite. also der Abstand zwischen zwei Monofilen, beträgt etwa 1 mm. Selbstverständlich kann das Gewebe auch so ausgebildet sein, daß Kette oder Schuß ganz oder teilweise aus synthetischen Fasern gesponnenen Fäden bestehen. Es empfiehlt sich jedoch, ein gewisses Grundgerüst von drahtähnlichen monofilen Fäden beizubehalten, um dem Gewebe eine Steifheit bzw. eine Starrheit zu geben, damit die nach den Figuren 2 bis 4 gebildeten Umhüllungen stabil stehen und nicht zusammenfallen. Damit sind sie wesentlich einfacher zu handhaben beim Einsetzen des Wurzelstocks und Einfüllen der Pflanzenerde in die Umhül lung bzw. auch nach dem Einsetzen in eine im Boden ausgehobene Pflanzgrube, die etwa die der Umhüllung gleichförmige Form hat. Wurzelstock und Pflanzerde werden dann nach dem Einsetzen der Umhüllung in die Pflanzgrube eingesetzt bzw. -gefüllt.

Nach einer anderen Ausführungsform ist ein Gewebe entsprechend der Figur 6 ausgebildet. Nach dieser Ausführungsform besteht beispielsweise die Kette des Gewebes aus Monofilen in beispielsweise 1 mm Abstand voneinander, während der Schuß abwechseln aus einem Monofilen und einem Bändchen besteht, das aus einer dünnen Kunststoffolie geschnitten ist. Bei Verwendung eines derartigen Gewebes, das teilweise aus Bändchen besteht für die Umhüllung, wird der Austausch mit dem umgebenden Boden hinsichtlich Feuchtigkeit, Nährstoffen usw. in keiner Weise behindert, andererseits besteht jedoch eine noch bessere Abschirmwirkung gegen das Durchwurzeln von innen nach außen in Form von feinsten Wurzeln.

Die vorstehend anhand von Ausführungsbeispielen beschriebenen Umhüllungen können an ihrem oberen Rand mit einer Randverstärkung oder auch einem Hohlsaum versehen sein. Diese Ausbildung dient zunächst der Verbesserung der Steifheit der Umhüllung. Bei Ausbildung eines Hohlsaums kann in diesen ein Seil oder ein starkes Band eingezogen sein, damit nach dem Einpflanzen die Umhüllung im oberen Randbereich über dem Wurzelstock zusammengezogen werden kann. Auch kann diese Ausbildung dazu benutzt werden, bei Ausbildung des Seils oder Bandes mit einer starken Schlaufe später die Pflanze zusammen mit dem Wurzelstock in der Umhüllung aus dem Boden zu heben, zu transportieren und auch später wieder einzusetzen.

In Figur 10 ist eine besonders vorteilahfte Ausführung einer Umhüllung dargestellt. Es eignen sich dazu sämtliche vorbeschriebenen Ausführungsformen von Säcken, Tüten o.dgl. Die Umhüllung 21 ist über ihre Füllung, dem Wurzelballen mit Erde hinaus nach oben verlängert. Dieser obere Bereich 22 hat ein Höhenmass, das etwa dem Halbmesser des Wurzelballens entspricht. Am obersten Rand 23 ist dieser Bereich mittels eines Bandes, Drahtes o.dgl. zusammengezogen, so daß der Rand dicht in der Nähe des Stammes der Pflanze diesen umgibt. Aufgrund der Steifheit des Gewebes bildet sich dadurch ein zeltartiger oberer Abschluss aus, der einen Luftraum umschliesst. Zutritt von Luft, insbesondere Wasser, wird dadurch nicht behindert, jedoch wirkt diese Ausbildung als Mulch, d.h. Unkrautsamen und Schädlingen wird der Zugang zu dem für das Pflanzenwachstum äusserst wichtigen Bereich um den Pflanzenstamm und über dem Wurzelballen wirksam verwehrt. Allenfalls können sehr kleine Pflanzensamen durch die Maschen des Gewebes durchfallen. Deren Entwicklung zu grösseren und damit nachteiligen Pflanzen wird jedoch wirksam verhindert durch Lichtmangel und die zeltartige Ausbildung, die ein Höhenwachstum nicht zulässt. Demnach ist die Schädlingsbekämpfung dadurch erheblich reduziert.

Nach einer anderen Ausführungsform können ein oder zwei Seile oder Bänder, unter dem Boden der Umhüllung hindurchgeführt und damit fest verbunden, schlaufenförmig über die Ränder der Umhüllung hinausragen. Damit sind Handgriffe geschaffen, an denen die Umhüllung mit dem darin befindlichen Wurzelstock und der Pflanzerde gefasst und aus der Pflanzgrube gehoben und transportiert werden kann.

Da die Umhüllung nach der Erfindung einen über mehrere Jahre wirkenden Verschulungseffekt hat, können danach Pflanzen im Freiland angezogen werden und dabei einen festen und kompakten Wurzelballen in begrenztem Raum ausbilden. Ein Auswurzeln wird verhindert. Andererseits sind die Pflanzen ständig verkaufsbereit und können umgepflanzt werden, ohne daß dabei Nachteile für die Pflanzen entstehen.

**Ansprüche**

1. Umhüllung für den Wurzelstock von Pflanzen bei Aufzucht im Freiland zur Ausbildung von festen Wurzelballen in begrenztem Raum, **dadurch gekennzeichnet,** daß zum Verhindern des Auswurzelns und der Vermeidung von Verschulen der Wurzelstock (1) zusammen mit Erde (2) o.dgl. in eine Tüte, Beutel oder einen Sack eingesetzt ist, der aus einem engmaschigen Gewebe oder Gewirk gebildet ist, das aus Monofilen und/oder Garn aus synthetischem Material besteht, wobei der Sack oder die Tüte Nähte an zu verbindenden Kanten aufweist, die genäht, geschweisst oder geklebt sind.

2. Umhüllung nach Anspruch 1, **dadurch gekennzeichnet,** daß der Sack oder die Tüte höchstens zwei Nähte an zu verbindenden Kanten aufweist.

3. Umhüllung nach Anspruch 1, **dadurch gekennzeichnet,** daß der Sack oder die Tüte derart gebildet sind, daß ein Abschnitt einer gewebten Flachbahn (14) doppelt gelegt und an der Faltung (15) eingelegt ist zur Erzeugung einer dreifachen (16,17) Faltung sowie Vernähen, Verschweissen und/oder Verkleben der aufeinanderliegenden Längsseiten (18) einschliesslich zumindest eines Teiles der eingelegten Faltung.

4. Umhüllung nach Anspruch 1, **dadurch gekennzeichnet,** daß der Sack oder die Tüte aus rundgewebtem oder -gewirktem textilen Material besteht, wobei der Boden (7) durch eine Quernaht (8) geschlossen ist.

5. Umhüllung nach Anspruch 1, **dadurch gekennzeichnet,** daß der Sack oder die Tüte aus rundgewebtem oder -gewirktem textilen Material besteht, wobei der Boden (7) rundum fächerförmig zur Mitte gefaltet, eine zentrale Verbindungsstelle zur Festlegung aufweist.

6. Umhüllung nach Anspruch 4 oder 5, **dadurch gekennzeichnet,** daß der mit einer Verbindungsstelle (8) verschlossene Boden (7) eingenommen bzw. eingedrückt ist.

7. Umhüllung nach Anspruch 1, **dadurch gekennzeichnet,** daß der Beutel als Kreuzbodentüte ausgebildet ist.

8. Umhüllung nach Anspruch 1, **dadurch gekennzeichnet,** daß der Beutel als Spitztüte ausgebildet ist.

9. Umhüllung nach Anspruch 1, **dadurch gekennzeichnet,** daß das Gewebe oder Gewirk eine Maschenweite von höchstens 1 mm hat.

10. Umhüllung nach Anspruch 1, **dadurch gekennzeichnet,** daß das Gewebe oder Gewirk durch Passieren zwischen erwärmten Walzen oder mittels Klebstoff stabilisiert ist.

11. Umhüllung nach Anspruch 1, **dadurch gekennzeichnet,** daß das Gewebe oder Gewirk, vorzugsweise aus Monofilen bestehend, halbstarr ausgebildet ist.

12. Umhüllung nach Anspruch 1, **dadurch gekennzeichnet,** daß das Gewebe aus Monofilen in einer Richtung (Kette oder Schuß) besteht und in der anderen Richtung (Schuß oder Kette) aus Monofilen und Bändchen, mindestens im Verhältnis 1:1, d.h., mindestens ein Monofil abwechselnd mit einem Bändchen, besteht.

13. Umhüllung nach einem der vorgenannten Ansprüche, **dadurch gekennzeichnet,** daß der obere Bereich (22) den Ballen (21) überragt um etwa das Maß des Halbmessers des Ballens und an seinem oberen Ende vorzugsweise lappenförmige Überstände aufweist, die flach überlappend zusammengelegt bis dicht an den Stamm der Pflanze reichend mit mindestens einem Verbindungselement festgelegt sind.

14. Umhüllung nach einem der vorstehenden Ansprüche 1 bis 12, **dadurch gekennzeichnet,** daß der obere Bereich (22) den Ballen (21) überragt um etwa das Maß des Halbmessers des Ballens und an seinem obersten Rand (23) mit einem Draht, Band o.dgl. bis dicht an den Stamm der Pflanze zusammengezogen ist, so daß er einen zeltartigen oberen Abschluss bildet.

15. Umhüllung nach Anspruch 1, **dadurch gekennzeichnet,**
daß an der die Öffnung des Beutels umgebenden Kante eine Verstärkung oder ein Hohlsaum ausgebildet sind.

16. Umhüllung nach Anspruch 1, **dadurch gekennzeichnet,** daß der Beutel mit mindestens zwei Griffen versehen ist, die vorzugsweise durch unter den Boden des Beutels durchlaufende Bandschlaufen gebildet sind.

Fig.4

Fig.5

Fig.6

Fig.1

Fig.3

Fig.2

Fig.8

Fig.9

Fig.9a

Fig. 7

Fig. 10

| | **EINSCHLÄGIGE DOKUMENTE** | | | EP 90103390.2 |
|---|---|---|---|---|
| Kategorie | Kennzeichnung des Dokuments mit Angabe, soweit erforderlich der maßgeblichen Teile | | Betrifft Anspruch | KLASSIFIKATION DER ANMELDUNG (Int Cl⁵) |
| Y | DE - A1 - 2 740 651 (GEBR.FRIEDRICH) * Fig. 1-3; Anspruch 1 * -- | | 1,14, 15,16 | A 01 G 9/10 |
| Y | US - A - 4 574 522 (REIGER et al.) * Fig. 1; Spalte 2, Zeile 4 - Spalte 5, Zeile 61 * -- | | 1,14, 15,16 | |
| A | DE - A - 2 327 711 (BOURNE) * Gesamt * -- | | 1,10, 14 | |
| A | DE - A1 - 3 047 818 (GRUBER) * Seite 7, Zeile 30 - Seite 8, Zeile 8 * ---- | | 1,9 | |
| | | | | RECHERCHIERTE SACHGEBIETE (Int Cl⁵) |
| | | | | A 01 G |
| | Der vorliegende Recherchenbericht wurde für alle Patentansprüche erstellt | | | |
| | Recherchenort WIEN | Abschlußdatum der Recherche 22-05-1990 | | Prüfer FESSLER |